(19) **Europäisches Patentamt**
**European Patent Office**
**Office européen des brevets**

(11) **EP 2 426 837 B1**

(12) **EUROPÄISCHE PATENTSCHRIFT**

(45) Veröffentlichungstag und Bekanntmachung des Hinweises auf die Patenterteilung:
**25.06.2014 Patentblatt 2014/26**

(51) Int Cl.:
***H04B 10/27*** *(2013.01)*

(21) Anmeldenummer: **10174526.3**

(22) Anmeldetag: **30.08.2010**

(54) **Zugangsnetz mit redundanter Systemauslegung**

Access network with redundant system design

Réseau d'accès doté d'une conception de système redondante

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(43) Veröffentlichungstag der Anmeldung:
**07.03.2012 Patentblatt 2012/10**

(73) Patentinhaber: **Deutsche Telekom AG**
**53113 Bonn (DE)**

(72) Erfinder:
• **Lange, Christoph**
**10318 Berlin (DE)**

• **Gladisch, Andreas**
**13129 Berlin (DE)**

(74) Vertreter: **Vossius & Partner**
**Siebertstrasse 4**
**81675 München (DE)**

(56) Entgegenhaltungen:
**EP-A1- 1 746 857     EP-A2- 1 215 830**
**WO-A1-99/18679     US-A1- 2008 131 124**

**Beschreibung**

Technisches Gebiet

Die vorliegende Erfindung bezieht sich auf das allgemeine Gebiet der Telekommunikation, insbesondere auf die effiziente Realisierung von Schutzmechanismen in einem optischen Zugangsnetz.

Hintergrund der Erfindung

Zugangsnetze im Festnetz-Telekommunikationsbereich stellen die Anschaltung von Endstellen an höhere Netzebenen sicher und ermöglichen damit deren Zugang zu Vermittlungseinrichtungen, Servern und damit verbundenen Diensten. Es sind somit Verbindungen von jedem potenziellen Endpunkt eines Netzes zu einem Zugangsnetzknoten herzustellen.

Herkömmliche Zugangsnetze verwenden weitestgehend die Kupferleitungsanschlusstechnik, die konzeptionell im Wesentlichen auf der Infrastruktur der analogen Telefonnetze basiert. Die Fläche von Staaten und Ländern ist in Anschlussbereiche gegliedert, die von einem Zugangsnetzknoten - der Ortsvermittlungsstelle - aus versorgt und angebunden werden. Die Ausdehnung dieser Anschlussbereiche ist durch die maximale Länge der Kupferleitung, d.h. über den vorgegebenen maximalen Leitungswiderstand oder durch die Schaltkapazität der Ortsvermittlungsstelle begrenzt. Typische maximale Längen in Anschlussbereichen in Deutschland liegen bei 5-7 km.

Die Breitbandzugangstechnologien wie z. B. Asymmetric Digital Subscriber Line, ADSL nutzen diese Kupferbasierte Infrastruktur und stellen so den Zugang zu Breitbanddiensten sicher. Bezüglich der Übertragungsrate kommen diese auf dem Medium Kupferkabel basierenden Übertragungsverfahren wegen der limitierten Übertragungskapazität der Kupferleitungen jedoch an ihre Grenzen. Die Glasfaser als Medium erlaubt weitaus höhere Datenraten, so dass ein Trend in Zugangsnetzen zu beobachten ist, Fasern näher zu den Endstellen hin zu verlegen, um die Kapazität der Zugangsnetzen zu erhöhen. Ziel dabei ist ein rein Glasfaser-basiertes Zugangsnetz - Fibre to the Home, FTTH, das das Kupfer-Zugangsnetz ablöst. Dabei stellt das Systemkonzept des passiven optischen Netzes, englisch "passive optical network, PON", eine vorteilhafte Lösung dar, die derzeit von einer Vielzahl von Netzbetreibem favorisiert wird. Siehe "FTTX - Concept and Applications, Keiser, Gerd, Hoboken, NJ, Wiley, 2006", S. 13-14.

Wird ein solches rein optisches Zugangsnetz realisiert und installiert, ist es möglich auf der Grundlage der gegenüber dem Kupferkabel verbesserten Übertragungseigenschaften der Glasfaser - höhere Bandbreite und geringere Dämpfung - größere Anschluss- bzw. Einzuasbereiche zu bilden, die von einem einzelnen Zugangsnetzknoten versorgt werden. Außerdem ist der Trend zur Konsolidierung der Netzplattformen zu beobachten: Aus Gründen der Kosteneffizienz wird anaestrebt, nicht für jeden Dienst ein separates Netz, z.B. ein Telefonnetz und ein Breitbandnetz zu betreiben, sondern ein integriertes Netz, d.h. auch ein Zugangsnetz soll in der Lage sein, zuverlässig für alle Dienste ausreichend Übertragungskapazität bereitzustellen.

Vor diesem Hintergrund wird Schutzkonzepten, die eine zuverlässige Übertragung auch im Fall einer Unterbrechung eines Erstweges ermöglichen, eine wachsende Bedeutung zukommen: Durch die größeren zu überbrückenden Entfernungen in den größeren Einzugsbereichen steigt die Wahrscheinlichkeit einer Unterbrechung des Erstweges und außerdem können darüber hinaus von einem solchen Ausfall viele Teilnehmer betroffen sein, da in den größeren Einzugsbereichen eine Vielzahl von Endstellen von einem Zugangsknoten versorgt wird. Die Möglichkeit der Dopplung der Infrastruktur auf einem Zweitweg und der dazugehörigen Svstemiechnik besteht und würde dieses Problem lösen, ist aber sehr kostenaufwendig.

US 2008/0131124 beschreibt ein Verfahren und eine Vorrichtung als Doppelschutzschaltung in einem Gigabit-PON, wobei nur eine operative Verbindung und eine Schutzverbindung zwischen einem 2:2-Splitter und einem N:1-Splitter angeordnet sind.

EP 1 746 857 A1 beschreibt ein Verfahren zum Steuern eines PONs, das mindestens zwei optische Leitungsterminierungen und mindestens eine optische Netzwerkeinheit aufweist. Das Verfahren weist folgende Schritte auf: Steuern der Kommunikation des PONs mit einer ersten optischen Leitungsterminierung; Aufrechterhalten einer zweiten optischen Leitungsterminierung im Leerlauf; Detektieren mit der zweiten optischen Leitungsterminierung, dass die erste optische Leitungsterminierung ausgefallen ist; Übernehmen mit der zweiten optischen Leitungsterminierung die Steuerung für die erste optische Leitungsterminierung; und Registrieren der optischen Netzwerkeinheit mit der zweiten optischen Leitungsterminierung.

Zusammenfassung der Erfindung

Der Erfindung liegt die Aufgabe zugrunde ein Zugangsnetz für Telekommunikation bereitzustellen, das eine bessere Betriebssicherheit bietet. Diese Aufgabe wird mit den Merkmalen der Patentansprüche gelöst. Die Erfindung geht dabei von folgenden Überlegungen aus.

Die Zugangsnetze, die auf der Kupferkabelstruktur basieren, verfügen nicht über Schutzkonzepte nach der vorliegenden Erfindung, da es auf Grund der überbrückten Längen und der relevanten Anzahlen von Endpunkten je Anschlussleitung bisher nicht notwendig war, zusätzliche Schutzsysteme zu installieren. Erst in Netzabschnitten oberhalb des Zugangsnetzes, die stärker konzentrierten Verkehr führen - z. B. in Aggregations- und Kernnetzen - sind Schutz- und Redundanzkonzepte installiert.

In einem passiven optischen Netz wird es auf Grund der größeren Längen und der höheren Konzentration von Endstellen je Faserverbindung und Zugangssystemabschluss bzw. Port notwendig, Schutzkonzepte für den Abschnitt vom Koppler bis zum Zugangsknoten vorzusehen, da hier Entfernungen von mehreren 10 km bis zu 100 km auftreten können und eine Vielzahl von Endstellen von einer Unterbrechung betroffen wäre. Der herkömmliche Ansatz, um auf diesem Abschnitt Schutz zu gewährleisten, ist es, eine doppelte Anbindung des Kopplers über einen zweiten Kopplerausgang an einen separaten Systemeingang im Zugangsknoten zu realisieren: Dadurch wird der Faserbedarf auf dem Abschnitt Koppler-Zugangsknoten verdoppelt und der Kostenaufwand erhöht sich entsprechend. Zudem ist ein zweiter Eingang in der Systemtechnik mit den dahinterliegenden Systemen im Zugangsknoten für den Schutz vorzusehen.

Zusammenfassend kann festgestellt werden, dass mit herkömmlichen Methoden Schutzkonzepte in zukünftigen Zugangsnetzen mit großen Einzugesbereichen realisiert werden können, dass dies jedoch mit hohen Kosten einhergeht.

Der herkömmliche Ansatz des Schutzes durch eine doppelte Anbindung des Kopplers über eine separate Faser führt zu hohen Kosten, insbesondere durch die Faserverlegung auf dem Abschnitt Koppler-OLT, wobei OLT für Optical Line Termination steht. Da im Fall einer Unterbrechung des Zugangsnetzes eine "Notversorgung" mit geringerer Bitrate - z. B. zur Sicherstellung des Telefondienstes - einerseits oftmals vom Gesetzgeber gefordert wird und andererseits ausreichend ist, ist es wünschenswert, eine kostengünstigere Schutzoption zu installieren als die Dopplung des Erstwegs mit der Faser als Übertragungsweg und der zugehörigen notwendigen Systemtechnik.

In der vorliegenden Erfindung wird ein Konzept beschrieben, das bei verminderter Leistungsfähigkeit hinsichtlich der Bitrate im Fall eines Fehlers auf einem Erstweg beispielsweise zur Aufrechterhaltung des Telefondienstes bzw. eines Datenzugangs einen Zweitweg mit niedrigerer Bitrate bereitstellt. Dies erlaubt eine kostengünstige Errichtung von Schutzmechanismen.

Eine geeignete Anordnung, um Schutz in Zugangsnetzen mit großen Einzugsbereichen bei verringerter Bitrate zu gewährleisten, wird in der vorliegenden Erfindung zusammen mit einigen Ausführungsbeispielen angegeben.

Die vorliegende Erfindung beschreibt eine Anordnung und ein Verfahren zur effizienten Bereitstellung von Schutzmechanismen in Zugangsnetzen mit großen Einzugsbereichen. Eine Aufgabe dabei ist es, eine Grundfunktionalität, z. B. Telefonie für Notrufe auch dann bereitzustellen, wenn der Erstweg gestört ist und dies im Hinblick auf die Kosten so effizient wie möglich realisieren zu können.

Die vorliegende Erfindung stellt eine Vorrichtung, Systeme und Verfahren bereit, die eine praktische Umsetzung eines Schutzkonzepts für passive optische Netze in FTTH-Zugangsnetzen mit vergrößerten Einzugsbereichen ermöglicht.

Das Prinzip der Erfindung basiert auf der von der Übertragungsrate abhängigen Empfängerempfindlichkeit in nachrichtentechnischen Systemen im Allgemeinen und bei optischen Übertragungssystemen im Besonderen: Bei geringerer Übertragungsrate ist der Empfänger empfindlicher als bei höherer Übertragungsrate. Im Fall der Unterbrechung des Erstweges wird über einen Zweitweg des Schutzkonzepts gemäß der vorliegenden Erfindung eine Verbindung mit geringerer Übertragungsrate beispielsweise zur Aufrechterhaltung des Telefondienstes bereitgestellt, die mit wesentlich geringerer Gesamtsystembitrate arbeitet als das System auf dem Erstweg. Dadurch kann eine zusätzliche Dämpfung auf der Übertragungsstrecke kompensiert werden: Im Fall der vorliegenden Erfindung wird dies dazu verwendet, einen zusätzlichen Leistungskoppler einzusetzen, um auf diese Weise den Verkehr im Fall des Erstwegeausfalls auf einer reduzierten Anzahl Glasfasern zu führen. Damit ist es möglich, gegenüber der Dopplung der zentralen Faser jedes Passive Optical Networks, PONs, eine deutlich Reduzierung der Faseranzahl zu erzielen.

Damit lassen sich auf diese Weise PON-basierte Zugangsnetze mit größeren Einzugsbereichen errichten, die im Falle einer Unterbrechung des Erstwegs eine zuverlässige Übertragung mit reduzierter Übertragungsrate bieten und kosteneffizient aufgebaut und betrieben werden können.

Die vorliegende Erfindung offenbart ein Zugangsnetz mit einer verbraucherseitigen Terminierung, die mehrere optische Netzwerkterminierungen aufweist; einer ersten und einer zweiten vermittlungsseitigen Terminierung, die jeweils mindestens eine optische Leitungsterminierung aufweisen; einem ersten Verteiler, der mit der verbraucherseitigen Terminierung verbunden ist; einem zweiten Verteiler, der mit dem ersten Verteiler verbunden ist; einem Erstweg mit einer ersten Übertragungsrate, der den ersten Verteiler und die erste vermittlungsseitige Terminierung verbindet; einem Zweitweg mit einer zweiten Übertragungsrate, der den zweiten Verteiler und die zweite vermittlungsseitige Terminierung verbindet; wobei die erste Übertragungsrate größer als die zweite Übertragungsrate ist. Vorzugsweise weist der Erstweg mehrere erste optische Leitungen auf. Der erste Verteiler kann mehrere erste Koppler aufweisen und wobei der zweite Verteiler mindestens einen zweiten Koppler hat. Die mehreren optischen Netzwerkterminierungen sind in mehrere Gruppen unterteilt und jede Gruppe der mehreren optischen Netzwerkterminierungen sind über einen der mehreren ersten Koppler mit einer der mehreren optischen Leitungen des Erstwegs verbunden. Die erste vermittlungsseitige Terminierung kann mehrere optische Leitungsterminierungen aufweisen, die jeweils mit einer der mehreren ersten optischen Leitungen des Erstwegs verbunden sind.

Vorzugsweise ist der erste Koppler ein $2:n_1$-Koppler und der zweite Koppler ist ein $1:n_2$-Koppler. Die erste und die zweite vermittlungsseitige Terminierung kann an einem Standort oder auch an verschiedenen Standorten angeordnet sein. Vorzugsweise kann auf dem Erstweg und/oder dem Zweitweg ein Reach Extender vorzugsweise mit einem Verstärker oder einer Einrichtung zur Regeneration angeordnet sein.

Der Zweitweg stellt eine redundante Systemauslegung als Notversorgung wie Telefondienst und/oder Datenverbindung mit verringerter Übertragungsrate für einen, vorzugsweise mehrere Erstweg(e) bereit, wenn ein oder mehrere Erstweg(e) eine Störung aufweist/aufweisen; und wobei die zweite Übertragungsrate des Zweitwegs einstellbar ist, vorzugsweise im Abhängigkeit in jeweiliger Empfangsempfindlichkeit.

Weist eine der mehreren ersten optischen Leitungen eine Störung auf, übernimmt die zweite optische Leitung den Dienst der ausgefallenen ersten optischen Leitung. Es können für den Zweitweg kostengünstigere Leitungen oder Leitungen mit geringerer Übertragungsrate verwendet werden, da er nur für Dienste ausgelegt ist, die weniger Bandbreite benötigen. Fallen mehrere erste optische Leitungen aus, übernimmt die zweite optische Leitung ebenfalls die Dienste der mehreren ersten optischen Leitungen. Der Zweitweg kann durchaus auch mehrere optische Leitungen aufweisen, aber die gesamte Übertragungsrate der optischen Leitungen auf dem Zweitweg ist geringer als die auf dem Erstweg. Mit anderen Worten benötigt das Konzept der vorliegenden Erfindung für den Zweitweg weniger und/oder günstigere Leitungen als für den Erstweg. Dadurch ermöglicht die vorliegende Erfindung einen kostengünstigeren bzw. vereinfachten Schutzmechanismus als der von dem herkömmlichen Verfahren.

Kurze Beschreibung der Zeichnungen

Fig. 1 zeigt illustrativ den prinzipiellen Aufbau eines passiven optischen Netzes mit Bezug zu heutigen Anschlussbereichen in einem Zugangsnetz;

Fig. 2 zeigt illustrativ und beispielhaft den Effekt der Konsolidierung von Standorten des Zugangsnetzes für Deutschland, wobei das linke Bild die Zugangsknoten der klassischen Anschlussbereiche zeigt, und das rechte Bild zentrale Zugangsknoten bei größeren Anschlussbereichen zeigt;

Fig. 3 zeigt illustrativ den prinzipiellen Aufbau eines passiven optischen Netzes mit Bezug zu größeren Anschlussbereichen in einem Zugangsnetz;

Fig. 4 zeigt einen beispielhaften Ausschnitt aus einem hierarchischen Telekommunikationsnetz am Beispiel von Zugangs- und Aggregationsnetz mit verschiedenen Abschlussmöglichkeiten des Zweitweges;

Fig. 5 zeigt eine Ausführung nach der vorliegenden Erfindung für das Schutzkonzept basierend auf mehrstufigen Kopplern und PONs mit unterschiedlichen Systembitraten für vergrößerte Anschlussbereiche;

Fig. 6 zeigt eine Ausführungsform nach der vorliegenden Erfindung, in der die Wegeführung für Erst- und Zweitweg gezeigt wird, z.B. in getrennten Kabelkanalanlagen bzw. Rohren;

Fig. 7 zeigt eine Ausführungsform nach der vorliegenden Erfindung, in der die OLT für Erst-und Zweitweg an einem Standort untergebracht sind;

Fig. 8 zeigt eine Ausführungsform nach der vorliegenden Erfindung, in der die OLT für Erst- und Zweitweg an verschiedenen Standorten untergebracht sind.

Ausführungsbeispiele der Erfindung

Nachfolgend wird die vorliegende Erfindung anhand von Ausführungsbeispielen und der

Figuren näher erläutert.

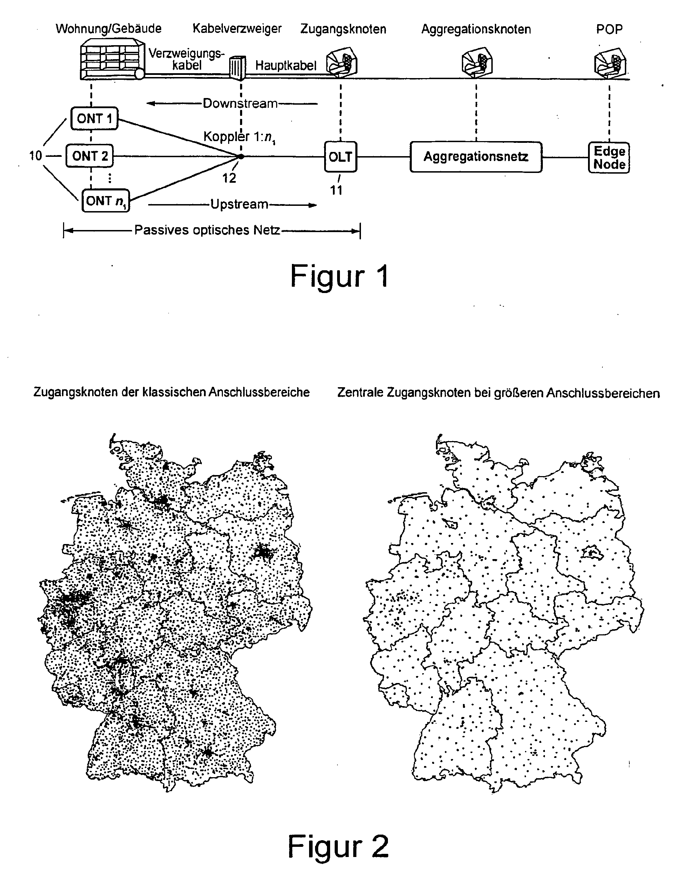

Fig. 1 zeigt in schematischer Form zur Illustration den Bezugsbereich mit den Standorten in Zugangs- und Aggregationsnetzen sowie das passive optische Netz mit seinen Elementen. Der aus dem Telefonnetz stammende konventionelle Anschlussbereich reicht von der Wohnung bzw. dem Gebäude über den Kabelverzweiger bis zum Zugangsknoten, der durch die Ortsvermittlungsstelle im Telefonnetz repräsentiert wird. Im Falle eines PON-basieilen FTTH-Netzes auf dieser Struktur ist im Zugangsknoten der OLT, d.h. Optical Line Termination 11 des PONs angeordnet und jede Wohnung verfügt über einen ONT, d.h. Optical Network Termination 10 als Abschluss des optischen Netzes. Ein Leistungskoppler 12 teilt das vom OLT kommende Signal in Abwärtsrichtung, d.h. Downstream auf die $n_1$ angeschlossenen Endstellen, d.h. ONT auf bzw. fügt die von den ONT in Aufwärtsrichtung, d.h. Upstream an den OLT gesendeten Datenströme zusammen. Durch die Aufteilung im Leistungskoppler erfährt das Signal eine Dämpfung von ca. $3{,}5 \log_2(n_1)$ dB. An den OLT schließt sich das Aggregationsnetz mit den Aggregationsknoten an, das neben weiteren Funktionen die Anbindung an den ersten Knoten des Kernnetzes, d.h. Edge Node am Point of Presence, POP übernimmt. Aggregationsnetze und Edge Node sind zur Einordnung des Netz- und Systemkonzeptes mit eingezeichnet.

Fig. 2 zeigt in schematischer Form den Effekt der Standortkonsolidierung im Zugangsnetz: Auf der linken Seite sind beispielhaft die Zugangsknoten (Ortsvermittlungsstellen) auf der Basis des Kupfer-basierten Zugangsnetzes in Deutschland abgebildet. Auf der rechten Seite der Abbildung sind die verbleibenden zentralen Zugangsknoten eingezeichnet bei einer exemplarischen Reduktion der Standorte basierend auf einem FTTH-Netz mit größeren Einzugsbereichen. Es wird deutlich, dass sich die Dichte der Zugangsknoten verringert und der vom einzelnen zentralen Zugangsknoten zu versorgende Einzugsbereich damit vergrößert.

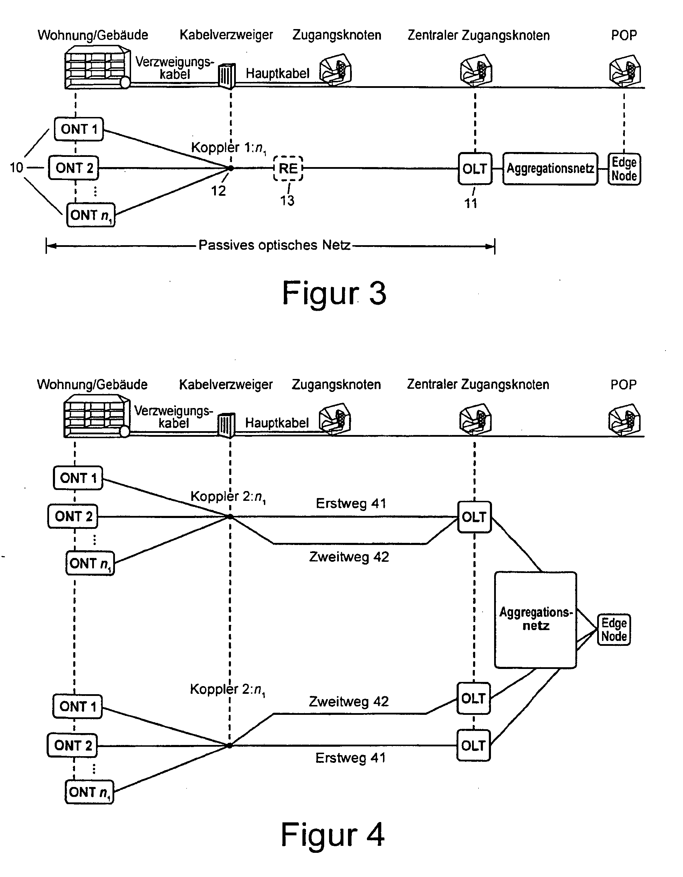

Fig. 3 zeigt illustrativ und schematisch den Einsatz eines PONs in einem größeren Einzugsbereich. Die prinzipielle Funktionsweise ist unverändert; im Unterschied zu Fig. 1 ist der OLT nun an dem zentralen Zugangsknoten angeordnet, der in Fig. 1 dem Aggregationsnetz zugeordnet und als Aggregationsknoten bezeichnet war. Von diesem zentralen Zugangsknoten wird ein größerer Einzugsbereich als der Bereich eines herkömmlichen Anschlussbereiches versorgt und deshalb sind größere Entfernungen zu überbrücken. Dies kann optional den Einsatz eines Reach Extenders, RE 13 erforderlich machen, der durch Verstärkung oder Regeneration die Reichweite erhöht. Ob ein solcher Reach Extender einzusetzen ist, hängt vom Charakter der Region ab (innerstädtisch, städtisch oder ländlich), die versorgt wird. Zwischen Koppler und OLT können Entfernungen im Bereich von mehreren 10 km bis in den Bereich von 100 km auftreten.

Fig. 4 zeigt ein Konzept, um Schutz in Zugangsnetzen mit vergrößerten Einzugsbereichen zu gewährleisten: Es wird eine Schutzfaser, d.h. Zweitweg 42 zwischen einem zweiten Kopplerausgang und einem redundanten OLT-Eingang desselben Typs bezüglich der Bitrate installiert. Dadurch wird bei Ausfall des Erstweges 41 eine Umschaltung auf den Zweitweg 42 ermöglicht und damit ein Betrieb des Netzes bei gleicher Leistungsfähigkeit, z. B. Bitrate. Dabei kann der Zweitweg 42 auf demselben OLT abgeschlossen werden, wie der Erstweg 41, siehe oberer Teil von Fig. 4, oder auf einem separaten OLT, siehe unterer Teil von Fig. 4, der wiederum im selben Zugangsknoten (Gebäude) oder in einem benachbarten Zugangsknoten untergebracht sein kann. Von Bedeutung ist dabei, dass Erst- und Zweitweg in getrennten Rohren bzw. Kabelkanalanlagen geführt werden, um wirklichen Schutz zu gewährleisten, wenn die Unterbrechung des Erstweges durch Naturkatastrophen, Unglücke oder Tiefbauarbeiten größere Ausmaße annimmt.

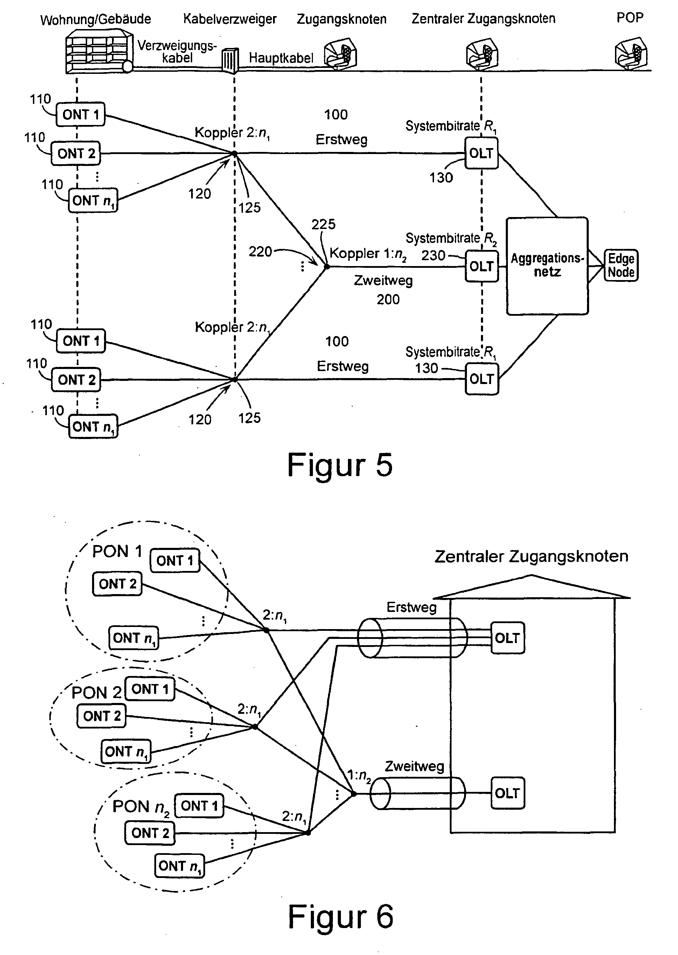

Fig. 5 zeigt das allgemeine Prinzip des Schutzkonzeptes nach der vorliegenden Erfindung. Die passiven optischen Netze für einen Erstweg 100 arbeiten mit der Systembitrate $R_1$. Wie in den Ausführungen gemäß Fig. 3 können optional Reach Extender 13 verwendet werden, wenn notwendig. Sie sind hier und in den folgenden Figuren und Erläuterungen der Übersichtlichkeit halber weggelassen. Gegenüber dem herkömmlichen Schutzkonzept entsprechend Fig. 4 ist nun der Zweitweg 200 verändert: Es gibt ein zweites PON 200, auf das im Falle einer Unterbrechung des Erstweges 100 zwischen Koppler 125 und OLT 130 umgeschaltet wird. Dieses PON arbeitet mit einer verringerten Systembitrate $R_2$. Dadurch ist die Empfängerempfindlichkeit erhöht und es kam die erhöhte Dämpfung - durch den zusätzlich notwendigen Koppler $1{:}n_2$ 225 und die im Allgemeinen größere Faserlänge bei disjunkter Wegeführung - überbrückt werden. Mit anderen Worten verläuft der Zweitweg 200 zwischen dem zusätzlichen Koppler 225 und einem OLT 230. Die nachfolgende Beispielrechnung verdeutlicht dies. Auf diese Weise wird ein Basis-Schutz für den Abschnitt zwischen Koppler 125 und OLT 130 bereitgestellt, so das im Fall einer Unterbrechung des Erstweges 100 ein Dienst mit niedriger Bitrate ($r_2 = R_2/n_1/n_2$) je Endstelle garantiert werden kann, der z. B. zur Aufrechterhaltung des Telefondienstes für Notrufzwecke eingesetzt werden kann. Die ONT 110 können sowohl die höhere Systembitrate $R_1$ des PONs auf dem Erstweg 100 als auch die niedrigere Systembitrate $R_2$ des Zweitwege-PONs 200 verarbeiten. OLT 130, 230 für Erst- und Zweitweg können als getrennte Systeme ausgeführt sein oder als verschiedene Einschubkarten in ein- und demselben OLT-Chassis. Darüberhinaus besteht die Möglichkeit, OLT zu verwenden, die beide Systembitraten unterstützen, d.h. "dual rate OLT". Des Weiteren ist eine einstellbare Bitrate $R_2$ des Schutz-Systems auf dem Zweitweg 200 vorteilhaft, um unterschiedliche Empfängerempfindlichkeiten einstellen zu können und somit das System auf diese Weise auf unterschiedliche Längenanforderungen, z. B. bei der Versorgung innerstädtischer, städtischer oder ländlicher Gebiete, hin anpassen zu können.

Fig. 6 zeigt das Prinzip der getrennten Wegeführung im Feld für Erst- 100 und Zweitweg 200, d. h. es sind Erst- und Zweitweg in getrennten Kabelkanalanlagen bzw. Rohren zu führen. Am zentralen Zugangsknoten werden Erst- 100 und Zweitweg 200 in unterschiedlichen Rohren bzw. Kabelkanalanlagen eingeführt um größtmöglichen Schutz zu erzielen. Die OLTs 130, 230 für Erst- und Zweitweg sind in diesem Beispiel separat ausgeführt und im selben zentralen Zugangsknoten installiert.

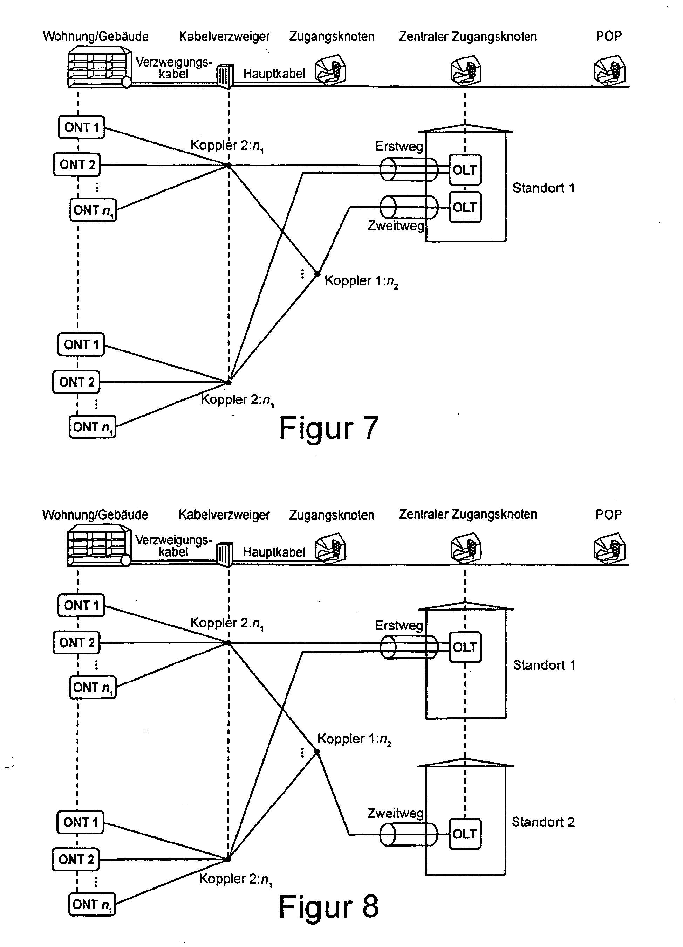

Fig. 7 zeigt ein prinzipielles Ausführungsbeispiel des in Fig. 5 dargestellten Schutzkonzepts, bei dem die OLT 130, 230 für Erst- und Zweitweg an einem Standort untergebracht sind. Es können getrennte OLT für das Erstwege- PON und das Zweitwege-PON installiert sein oder aber beide OLT können als Einschubkarten für ein- und dasselbe Gehäuse ausgeführt sein. In diesem Fall bietet die Anordnung Schutz, wenn der Verbindungsweg bzw. Kabel zwischen dem zentralen Netzknoten und dem Koppler unterbrochen ist, jedoch nicht, wenn der Standort 1 - z. B. das Gebäude - zerstört wird.

Fig. 8 zeigt ein weiteres prinzipielles Ausführungsbeispiel des in Fig. 5 dargestellten Schutzkonzepts, bei dem die OLT 130, 230 für Erst- und Zweitweg an verschiedenen Standorten untergebracht sind. Fällt der Erstweg 100 aus, wird die Verbindung über den Zweitweg 200 aufrechterhalten, auch dann, wenn z. B. der Standort 1 zerstört ist, da nun der OLT 230 des Zweitweges in einem geographisch entfernten Gebäude, am Standort 2, untergebracht ist - beispielsweise im zentralen Netzknoten eines benachbarten Einzugs- oder Anschlussbereiches.

Beispielrechnung zur Verdeutlichung des Nutzens der vorliegenden Erfindung

Es wird eine Anordnung entsprechend Fig. 5 betrachtet. Dabei werden beispielhafte Zahlenwerte zu Grunde gelegt, um den Nutzen der vorliegenden Erfindung zu verdeutlichen.

Auf dem Erstweg wird ein PON mit der Systembitrate $R_1$ = 10 Gbit/s vorausgesetzt, was dem Standard für Next Generation PON 1 entspricht. Das Teilungsverhältnis des Kopplers beträgt $n_1$ = 32, was den derzeitig üblichen Ausbauregeln entspricht. Damit kann jeder Endstelle eine Bitrate von $r_1 = R_1/n_1$ = 312,5 Mbit/s garantiert werden. Das Buch "Photonik für Ingenieure, Glaser, Wolfgang, Verlag Technik, Berlin, 1997" beschreibt auf Seiten 242-244 einen APD-Empfänger, Avalanche Photo Diode. Wird ein APD-Empfänger verwendet, kann eine Empfindlichkeit von ca. -30 dBm bei einer Bitrate von 10 Gbit/s erzielt werden, was bei einer Sendeleistung von ca. 0 dBm zu einem Budget von 30 dB - entsprechend class-C-Optik - führt. Die Berechnungsgrundlage ist in dem Buch "Optical Networks - A Practical Perspective, Ramaswami, Rajiv, Sivarajan, Kumar N., San Francisco, San Diego, New York, Morgan Kaufmann Publishers, An Imprint of Academic Press, 1998", auf Seiten 189-190 beschrieben.

Weitere Voraussetzungen:

■ Kilometrische Dämpfung der Glasfaser: $\alpha_F$ = 0,44 dB (einschließlich Spleißdämpfung)
■ Dämpfung im Zugangsknoten: $\alpha_{AN}$ = 1,7 dB (Spleiße, Steckverbinder, Faser)

Unter diesen Voraussetzungen lässt sich eine Entfernung von

$$l = \frac{30\,\text{dB} - a_{AN} - 3,5\log_2(n_1)}{\alpha_F} = \frac{30\,\text{dB} - 1,7\,\text{dB} - 17,5\,\text{dB}}{0,44\,{\text{dB}}/{\text{km}}} = 24,5\,\text{km}$$

überbrücken, was insbesondere in städtischen Bereichen zu einer nennenswerten Konsolidierung von Zugangsstandorten ausreichend ist.

Wird nun der Zweitweg betrachtet, so ist die Systembitrate zu verringern, im Beispiel um zwei Dekaden auf $R_2$ = 100 Mbit/s, was zu einer verbesserten Empfängerempfindlichkeit (-41 dBm nach den Formeln in dem Buch "*Optical Networks - A Practical Perspective*") und damit zu einer Erhöhung des verfügbaren optischen Leistungsbudgets um 11 dB - bei gleicher Sendeleistung - führt. Setzt man im Beispielfall gleiche Längen für Erst- und Zweitweg voraus, so können diese zusätzlichen 11 dB für den zweiten Koppler verwendet werden, der darauf basierend mit einem Teilungsverhältnis von 1:8 ($n_2$ = 8; Dämpfung 3,5 log2(8) = 10,5 dB) gewählt wird: Damit versorgt im Falle der Unterbrechung des Erstwegs der Zweitwege-OLT nln2 = 256 Endstellen mit einer garantierten Bitrate von $r_2 = R_2 l(n_1/n_2)$ = 390,625 kbit/s, was ausreichend ist, um eine Telefonverbindung und gegebenenfalls eine niederbitratige Datenverbindung sicherzustellen.

Der Faserbedarf - und die damit verbundenen Kosten - wird zwischen Koppler und OLT um den Faktor $n_2$, im

Beispiel $n_2$ = 8, gegenüber der Dopplung der Faser in diesem Abschnitt bei der herkömmlichen Schutzlösung gesenkt. Außerdem ist als PON für den Schutz ein niederbitratiges System notwendig, was ebenfalls eine kostengünstige Herstellung ermöglicht.

Um größere Längen zu erreichen, können Reach Extender - wie in Fig. 3 angedeutet - eingesetzt werden. Da diese auf dem Abschnitt zwischen Koppler und OLT eingebracht werden, ist auch hier der für die Fasern dargestellte Kostenvorteil zu erzielen, wenn das Schutzkonzept nach der vorliegenden Erfindung verwendet wird.

Während die vorliegende Erfindung hier unter Bezug auf ihre bevorzugten Ausführungsformen beschrieben und dargestellt wurde, ist für Fachleute auf dem Gebiet offensichtlich, dass verschiedene Modifikationen und Änderungen daran vorgenommen werden können, ohne den Schutzbereich der Erfindung zu verlassen. Auf diese Weise ist beabsichtigt, dass die vorliegende Erfindung die Modifikationen und Änderungen dieser Erfindung abdeckt, sofern sie in den Schutzbereich der beigefügten Patentansprüche und ihrer Äquivalente fallen.

**Patentansprüche**

1. Zugangsnetz für Telekommunikation in dem Bereich "Fiber-To-The-Home", mit
einer verbraucherseitigen Terminierung (110), die mehrere optische Netzwerkterminierungen (110) aufweist;
einer ersten und einer zweiten vermittlungsseitigen Terminierung (130, 230), die jeweils mindestens eine optische Leitungsterminierung (130, 230) aufweisen;
einem ersten Verteiler (120), der mit der verbraucherseitigen Terminierung (110) verbunden ist;
einem zweiten Verteiler (220), der mit dem ersten Verteiler (120) verbunden ist; einem Erstweg (100) mit einer ersten Übertragungsrate ($R_1$), der den ersten Verteiler (120) und die erste vermittlungsseitige Terminierung (130) verbindet;
einem Zweitweg (200) mit einer zweiten Übertragungsrate ($R_2$), der den zweiten Verteiler (220) und die zweite vermittlungsseitige Terminierung (230) verbindet;
**dadurch gekennzeichnet,**
**dass** die erste Übertragungsrate größer als die zweite Übertragungsrate ist, wobei der Zweitweg (200) eine redundante Systemauslegung als Notversorgung wie Telefondienst und/oder Datenverbindung mit verringerter Übertragungsrate für den Erstweg (100) bereitstellt.

2. Zugangsnetz nach Anspruch 1,
wobei der Erstweg mehrere erste optische Leitungen aufweist;
wobei der erste Verteiler mehrere erste Koppler (125) aufweist;
wobei der zweite Verteiler mindestens einen zweiten Koppler (225) aufweist;
wobei die mehreren optischen Netzwerkterminierungen (110) in mehreren Gruppen unterteilt sind, und jede Gruppe der mehreren optischen Netzwerkterminierungen (110) über einen der mehreren ersten Koppler (125) mit einer der mehreren optischen Leitungen des Erstwegs verbunden sind;
wobei die erste vermittlungsseitige Terminierung (130) mehrere optische Leitungsterminierungen (130) aufweist, die jeweils mit einer der mehreren ersten optischen Leitungen des Erstwegs (100) verbunden sind.

3. Zugangsnetz nach Anspruch 2, wobei der erste Koppler (125) ein 2:$n_1$-Koppler ist und der zweite Koppler (225) ein 1:$n_2$-Koppler ist.

4. Zugangsnetz nach Anspruch 1, 2 oder 3, wobei die erste und die zweite vermittlungsseitige Terminierung (130, 230) an einem Standort angeordnet sind.

5. Zugangsnetz nach Anspruch 1, 2 oder 3, wobei die erste und die zweite vermittlungsseitige Terminierung (130, 230) an verschiedenen Standorten angeordnet sind.

6. Zugangsnetz nach einem der vorhergehenden Ansprüche, wobei auf dem Erstweg (100) und/oder dem Zweitweg (200) mindestens ein Reach Extender angeordnet ist.

7. Zugangsnetz nach einem der vorhergehenden Ansprüche, wobei die zweite Übertragungsrate des Zweitwegs (200) einstellbar ist, vorzugsweise in Abhängigkeit von der jeweiligen Empfangsempfinelichkeit.

8. Verfahren zum Betreiben eines Zugangsnetzes nach einem der Ansprüche 1 bis 7, wobei beim Ausfall mindestens eines Erstwegs die Datenkommunikation über einen Zweitweg mit niedrigerer Übertragungsrate erfolgt.

## Claims

1. Access network for telecommunication in the "Fiber-To-The-Home" field, comprising a customer-side termination (110) comprising a plurality of optical network terminations (ONTs) (110);
a first and a second exchange-side termination (130, 230) having at least one optical line termination (OLT) (130, 230) each;
a first distributor (120) connected to the customer-side termination (110);
a second distributor (220) connected to the first distributor (120);
a first path (100) having a first transmission rate ($R_1$), which connects the first distributor (120) and the first exchange-side termination (130);
a second path (200) with a second transmission rate ($R_2$), which connects the second distributor (220) and the second exchange-side termination (230);
**characterized in that**
the first transmission rate is higher than the second transmission rate, with the second path (200) providing a redundant system design as emergency care, such as a telephone service and/or data connection with a reduced transmission rate for the first path (100).

2. Access network according to claim 1, wherein
the first path has a plurality of first optical lines;
the first distributor has a plurality of first couplers (125);
the second distributor has at least one second coupler (225);
the plurality of optical network terminations (ONTs) (110) is subdivided into a plurality of groups, and each group of the plurality of optical network terminations (ONTs) (110) is connected to one of the optical lines of the first path via one of the plurality of first couplers (125),
the first exchange-side termination (130) has a plurality of optical line terminations (OLTs) (130), each of which is connected to one of the plurality of first optical lines of the first path (100).

3. Access network according to claim 2, wherein the first coupler (125) is a 2:$n_1$ coupler and the second coupler (225) is a 1:$n_2$ coupler.

4. Access network according to claim 1, 2 or 3, wherein the first and second exchange-side terminations (130, 230) are located at one location.

5. Access network according to claim 1, 2 or 3, wherein the first and second exchange-side terminations (130, 230) are located at different locations.

6. Access network according to any one of the preceding claims, wherein at least one reach extender is arranged on the first path (100) and/or the second path (200).

7. Access network according to any one of the preceding claims, wherein the second transmission rate of the second path (200) is adjustable, preferably in dependence on the respective reception sensitivity.

8. Process for operating an access network according to any one of claims 1 to 7, wherein, upon failure of at least a first path, the data communication takes place via a second path with a lower transmission rate.

## Revendications

1. Réseau d'accès de télécommunications du type « Fiber to the Home », avec une terminaison côté utilisateur (110), pourvue d'une pluralité de terminaux de réseau optique (110) ;
une première et une deuxième terminaison côté commutation (130, 230), présentant chacune au moins une terminaison de ligne optique (130, 230) ;
un premier distributeur (120) relié à la terminaison côté utilisateur (110) ;
un deuxième distributeur (220) relié au premier distributeur (120) ; une voie primaire (100) avec un premier débit de transmission ($R_1$), laquelle relie le premier distributeur (120) et la première terminaison côté commutation (130) ;
une voie secondaire (200) avec un deuxième débit de transmission ($R_2$), laquelle relie le deuxième distributeur (220) et la deuxième terminaison côté commutation (230) ; **caractérisé**
**en ce que** le premier débit de transmission est supérieur au deuxième débit de transmission, la voie secondaire (200) assurant une configuration système redondante en tant qu'alimentation de secours telle que service téléphonique et/ou liaison de données à débit de transmission réduit pour la voie primaire (100).

2. Réseau d'accès selon la revendication 1,
où la voie primaire comporte plusieurs premières lignes optiques ;
où le premier distributeur comporte plusieurs premiers coupleurs (125) ;
où le deuxième distributeur comporte au moins un deuxième coupleur (225) ;
où la pluralité de terminaux de réseau optique (110) est subdivisée en plusieurs groupes, et chaque groupe des plusieurs terminaux de réseau optique (110) est relié par un des plusieurs premiers coupleurs (125) à une des plusieurs lignes optiques de la voie primaire ;
où la première terminaison côté commutation (130) comporte plusieurs terminaisons de ligne optique (130), reliées chacune à une des plusieurs premières lignes optiques de la voie primaire (100).

3. Réseau d'accès selon la revendication 2, où le première coupleur (125) est un coupleur $2:n_1$ et le deuxième coupleur (225) un coupleur $1:n_2$.

4. Réseau d'accès selon la revendication 1, la revendication 2 ou la revendication 3, où la première et la deuxième terminaison côté commutation (130, 230) sont disposées sur un même site.

5. Réseau d'accès selon la revendication 1, la revendication 2 ou la revendication 3, où la première et la deuxième terminaison côté commutation (130, 230) sont disposées sur des sites différents.

6. Réseau d'accès selon l'une des revendications précédentes, où au moins un Reach Extender est disposé sur la voie primaire (100) et/ou la voie secondaire (200).

7. Réseau d'accès selon l'une des revendications précédentes, où le deuxième débit de transmission de la voie secondaire (200) est réglable, préférentiellement en fonction de la sensibilité de réception correspondante.

8. Procédé de fonctionnement d'un réseau d'accès selon l'une des revendications 1 à 7, où, en cas de défaillance d'au moins une voie primaire, la communication de données est réalisée par l'intermédiaire d'une voie secondaire à débit de transmission réduit.

Figur 1

Zugangsknoten der klassischen Anschlussbereiche    Zentrale Zugangsknoten bei größeren Anschlussbereichen

Figur 2

EP 2 426 837 B1

Figur 3

Figur 4

11

Wohnung/Gebäude    Kabelverzweiger    Zugangsknoten    Zentraler Zugangsknoten    POP

Verzweigungs-kabel    Hauptkabel

110 — ONT 1

110 — ONT 2

110 — ONT $n_1$

Koppler 2:$n_1$

100
Erstweg

Systembitrate $R_1$

OLT

130

120

125

225

220

Koppler 1:$n_2$    230

Systembitrate $R_2$

OLT

Zweitweg
200

Aggregations-netz

Edge Node

110 — ONT 1

110 — ONT 2

110 — ONT $n_1$

Koppler 2:$n_1$

100
Erstweg

Systembitrate $R_1$
130 — OLT

120    125

## Figur 5

PON 1    ONT 1

ONT 2

ONT $n_1$

2:$n_1$

Erstweg

OLT

Zentraler Zugangsknoten

PON 2    ONT 1

ONT 2

ONT $n_1$

2:$n_1$

1:$n_2$    Zweitweg

OLT

PON $n_2$    ONT 1

ONT 2

ONT $n_1$

2:$n_1$

## Figur 6

EP 2 426 837 B1

Figur 7

Figur 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20080131124 A
- EP 1746857 A1

**In der Beschreibung aufgeführte Nicht-Patentliteratur**

- FTTX - Concept and Applications. Wiley, 2006, 13-14
- Photonik für Ingenieure. Verlag Technik, 1997, 242-244
- Optical Networks - A Practical Perspective. Morgan Kaufmann Publishers, An Imprint of Academic Press, 1998, 189-190